Europäisches Patentamt

European Patent Office

Office européen des brevets

(19)

(11) **EP 1 125 205 B1**

(12) **FASCICULE DE BREVET EUROPEEN**

(45) Date de publication et mention
de la délivrance du brevet:
**26.03.2003 Bulletin 2003/13**

(21) Numéro de dépôt: **99949095.6**

(22) Date de dépôt: **22.10.1999**

(51) Int Cl.[7]: **G06F 12/02**, G06F 12/06

(86) Numéro de dépôt international:
**PCT/FR99/02578**

(87) Numéro de publication internationale:
**WO 00/026790 (11.05.2000 Gazette 2000/19)**

(54) **MEMOIRE A ACCES VECTORIEL**

SPEICHER MIT VEKTORZUGRIFF

MEMORY WITH VECTORIAL ACCESS

(84) Etats contractants désignés:
**DE GB NL**

(30) Priorité: **30.10.1998 FR 9813664**

(43) Date de publication de la demande:
**22.08.2001 Bulletin 2001/34**

(73) Titulaire: **Thales Underwater Systems SAS
06903 Sophia Antipolis (FR)**

(72) Inventeurs:
• **DEMEURE, Alain
Thomson-CSF Prop. Int. Dép. Brevets
94117 Arcueil Cedex (FR)**
• **TOMASINI, Didier
Thomson-CSF Prop. Int. Dépt. Bre.
94117 Arcueil Cedex (FR)**

(74) Mandataire: **Dudouit, Isabelle et al
THALES Intellectual Property
13, avenue Président Salvador Allende
94117 Arcueil Cedex (FR)**

(56) Documents cités:
• **DE-LEI LEE: "ARCHITECTURE OF AN ARRAY
PROCESSOR USING A NONLINEAR SKEWING
SCHEME" IEEE TRANSACTIONS ON
COMPUTERS, vol. 41, no. 4, 1 avril 1992
(1992-04-01), pages 499-505, XP000266864**
• **SWANSON R C: "Interconnections for parallel
memories to unscramble p-ordered vectors"
IEEE TRANSACTIONS ON COMPUTERS, NOV.
1974, USA, vol. C-23, no. 11, pages 1105-1115,
XP002107364 ISSN 0018-9340 cité dans la
demande**
• **SEZNEC A ET AL: "ODD MEMORY SYSTEMS
MAY BE QUITE INTERESTING" 16 mai 1993
(1993-05-16) , PROCEEDINGS OF THE ANNUAL
INTERNATIONAL SYMPOSIUM ON COMPUTER
ARCHITECTURE, SAN DIEGO, MAY 16 - 19, 1993,
NR. SYMP. 20, PAGE(S) 341 - 350 , INSTITUTE OF
ELECTRICAL AND ELECTRONICS ENGINEERS
XP000399012 page 343, colonne de gauche,
alinéa 3 -page 345, colonne de droite, alinéa 4.1;
figures 4,5**
• **"RESIDUE GENERATOR FOR AN ADDRESS
MAPPING SYSTEM FOR A MEMORY WITH A
PRIME NUMBER STRIDE CAPABILITY" IBM
TECHNICAL DISCLOSURE BULLETIN, vol. 30,
no. 9, 1 février 1988 (1988-02-01), pages 226-229,
XP000021699**

**Description**

Le domaine de l'invention est celui des mémoires parallèles qui constituent une approche intéressante pour adapter le débit mémoire à la puissance de calcul aujourd'hui implantable sur un circuit intégré. Une mémoire parallèle est une mémoire capable en un seul cycle d'accès de lire ou d'écrire dans plusieurs cases mémoire. Une machine de type SIMD, abréviation de l'expression anglo-saxonne : Single Instruction Multiple Data, machine connue de l'homme de l'art, justifie naturellement l'usage d'une mémoire parallèle, accessible par tous les processeurs élémentaires entrant dans la composition de cette machine. Une telle mémoire rend en effet inutile une fonction dédiée à la communication entre les processeurs élémentaires, ce qui simplifie grandement le fonctionnement et accroît notablement les performances. Les machines SIMD sont principalement utilisées pour faire des traitements sur des données organisées en tableaux et en particulier pour faire du traitement de signal. Exécutant dans le même cycle la même instruction, les processeurs élémentaires d'une machine SIMD sont amenés à accéder à des composantes alignées et équidistantes au sein d'un même tableau. Ces composantes peuvent être vues comme constituant un vecteur ce qui amène à nommer « mémoire à accès vectoriel » une mémoire permettant d'accéder dans un tableau à des composantes alignées et équidistantes. Au cours des traitements, il peut être nécessaire d'accéder à des vecteurs ayant une orientation quelconque par rapport aux axes d'un même tableau, ou pour le moins parallèles à n'importe quel axe de ce tableau. Le nombre de composantes du tableau séparant deux composantes successivement considérées dans le vecteur peut lui aussi être quelconque. Ces contraintes font qu'une mémoire à accès vectoriel ne peut être constituée par une simple juxtaposition de blocs de mémoire RAM, abréviation de l'expression anglo-saxonne : Random Access Memory. Ces contraintes nécessitent de choisir avec soin le nombre de bancs et d'avoir des calculateurs d'adresse obéissant à des règles particulières d'implantation des tableaux en mémoire. Enfin ces contraintes nécessitent des fonctions de réorganisation des composantes du vecteur intervenant avant écriture ou après lecture dans les bancs.

R.C. Swanson dans son article « Interconnections for paraffel memories to unscramble p-ordered vectors » publié sous la référence IEEE Transactions on computers, vol. C-23, n° 11, november 1974, présente dans la section II un modèle de calculateur SIMD mettant en oeuvre une mémoire parallèle. Il montre des exemples d'implantation de tableaux 2D dans cette mémoire, il donne la définition de vecteurs p-ordonnés, et il indique l'avantage de flexibilité apporté par un nombre premier de bancs mémoire. Seul le problème de réordonnancement d'un vecteur est abordé dans les sections suivantes de l'article ; elfes proposent en effet des réseaux permettant de réordonner un vecteur. L'article de R.C. Swanson n'indique pas comment réaliser une mémoire parallèle : le calcul des adresses appliquées aux bancs n'est pas abordé, seule est mentionnée une implantation de tableaux limités à deux dimensions ; le réseau proposé nécessite que les éléments du vecteur réordonné subissent des routages multiples dépendant de son p-ordonnancement initial.

Le document de DE-LEI LEE intitulé « architecture of an array processor using a nonlinear skewing scheme « publié sous la référence IEEE transactions on computers, vol 41, n° 4,1, 1 avril 1992 (1992-04-01), pages 499-505, XP000266864 décrit une architecture de machine du type « non linear skewing » pour lesquelles les accès sont réalisées à l'aide de lignes, de colonnes et de diagonales.

SEZNEC et AL dans le document intitulé « Odd memory systems may be quite interesting » publié sous la référence « Proceedings of the architecture, San Diego, May 16-19, 1993, NR.SYMP.20, pages 341-350, institute of electrical and electronics engineers XP000399012 divulgue l'utilisation du théorème chinois pour générer un nombre premier de bancs mémoire et permettre un mapping très simple des données sur les bancs.

Le document publié sous la référence « Residue generator for an address mapping system for a memory with a prime number stride capability » IBM technical disclosure bulletin, vol.30, n°9, 1 février 1998 (1998-02-01), pages 226-229, XP000021699 décrit un générateur de résidus dans un système de mémoire entrelacée de façon multiple.

Pour répondre au problème posé, l'invention propose une réalisation d'une mémoire à accès vecteur. A cet effet, l'invention a pour objet une mémoire de données organisées en tableaux, dont la structure permet des accès par vecteurs de N composantes, adressée suivant une base déterminée d'un système de numération en résidu, caractérisée en ce qu'elle est organisée en M bancs mémoire de K cases dont chacun, numéroté entre 0 et M-1, et comportant un réseau unidirectionnel réalisant une permutation des composantes du vecteur en accès qui consiste, soit à passer d'un vecteur n-ordonné en un vecteur 1-ordonné, soit à passer d'un vecteur 1-ordonné en un vecteur n-ordonné, caractérisé en ce que :

- chaque banc comporte un calculateur d'adresse de l'adresse locale $(k(i))$ dans le banc considéré $(m(i))$ d'une composante $(i)$ du vecteur en accès et en ce que le réseau unidirectionnel réalise une translation d'une valeur déterminée $t$ des composantes du vecteur en accès,
- pour calculer, dans un banc mémoire déterminé $(m(i))$, l'adresse locale $(k(i))$ de la composante d'un vecteur dont l'origine est stockée dans un banc mémoire numéroté $m(0)$, le calculateur d'adresse du banc mémoire déterminé $(m(i))$ réalise successivement:

- la détermination de la valeur i de la composante du vecteur qu'il contient au moyen de la relation suivante:

$$i = [[m(i) + - [m(0)] (\text{mod} M)] (\text{mod} M) \times [(\Delta m)]^{-1} (\text{mod} M)] (\text{mod} M)$$

avec -[m(0)](modM) l'opposé de m(0) modulo M vérifiant la relation:
m(0) + [-m(0)] = 0 (modM) et avec [($\Delta$m)]$^{-1}$ (modM) l'inverse de $\Delta$m modulo M vérifiant la relation: $\Delta$m x [($\Delta$m)]$^{-1}$ = 1(modM) et avec $\Delta$m l'incrément d'indice avec lequel les composantes du vecteur sont stockées dans les bancs mémoire,
- le calcul de l'adresse locale (k(i)) connaissant i:

$$k(i) = [k(0) + i \times [\Delta k] (\text{mod} K)](\text{mod} K)$$

avec $\Delta$k l'incrément d'indice avec lequel les composantes du vecteur sont stockées dans les cases mémoire et k(0) le numéro de la case mémoire dans laquelle est rangée l'origine du vecteur et en ce que le réseau unidirectionnel comprend un premier ensemble de deux couches et en série un deuxième ensemble de deux couches, le premier ensemble de couches étant organisé pour modifier d'une valeur p l'espacement entre les composantes successives d'un vecteur présent en entrée du réseau, soit pour p-ordonner les composantes 1-ordonnées du vecteur lors d'une écriture en mémoire, soit pour 1-ordonner les composantes p-ordonnées du vecteur lors d'une lecture de la mémoire, le deuxième ensemble de couches étant organisé pour translater les composantes du vecteur, issu du premier ensemble de couches, d'une valeur déterminée t de translation, soit pour recaler l'origine du vecteur lors d'une lecture de la mémoire, soit pour décaler l'origine du vecteur lors d'une écriture en mémoire.

Une mémoire selon l'invention est structurée en plusieurs bancs. La gestion des emplacements mémoire, telle que le permet le calculateur d'adresse de chaque banc associé au réseau de permutation des composantes des vecteurs, est réalisée de manière à optimiser les accès à la mémoire afin d'en augmenter le débit. Le réseau comprend un nombre de couches et un nombre de modes de fonctionnement par couche déterminés en fonction d'un compromis entre la rapidité et la simplicité. La rapidité n'est pas compatible d'un nombre de couches élevé. La simplicité demande un nombre réduit de modes de fonctionnement.

D'autres caractéristiques et avantages de l'invention apparaîtront à l'aide de la description qui suit faite en regard des dessins annexés qui représentent :

- la figure 1, l'organisation générale des chemins de données d'une mémoire selon l'invention,
- la figure 2, une correspondance entre une structure physique et une structure fonctionnelle d'une mémoire,
- la figure 3, l'adressage des bancs mémoire,
- la figure 4, un bloc de calcul d'un calculateur d'adresse,
- la figure 5, un premier ensemble de couches d'un réseau d'une mémoire selon l'invention,
- la figure 6, un deuxième ensemble de couches du réseau,
- la figure 7, un tableau de correspondance entre pas d'ordonnancement p et modes de fonctionnement des couches du premier ensemble de couches,
- la figure 8, un tableau de correspondance entre valeur de translation t et mode de fonctionnement des couches du deuxième ensemble de couches.

Dans l'ensemble du document les termes modulo et mod sont totalement identiques.

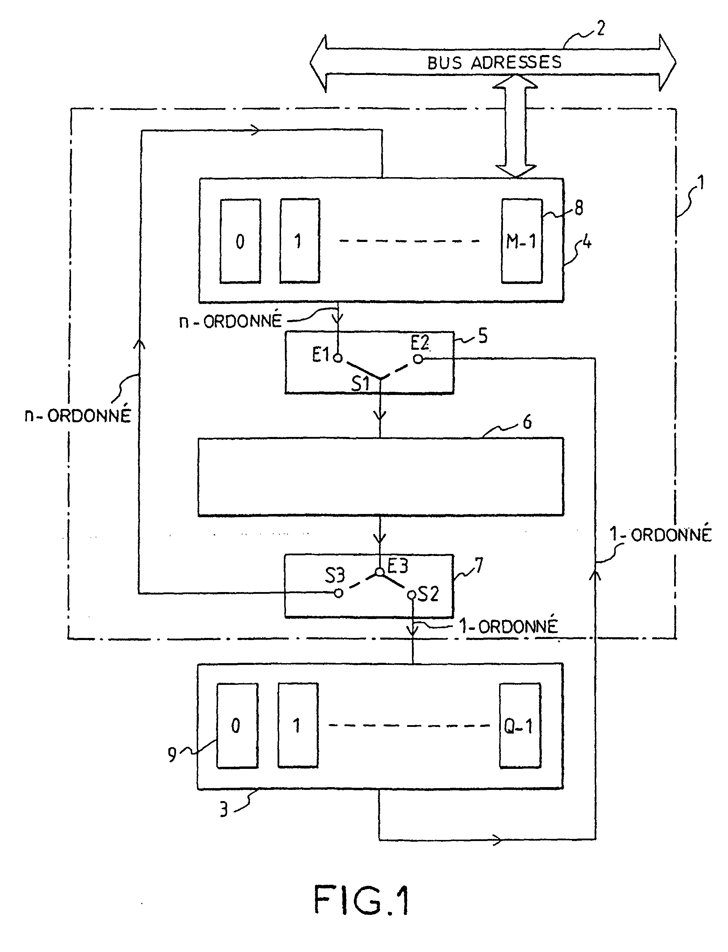

La figure 1 représente schématiquement l'organisation générale des chemins de données d'une mémoire 1 selon l'invention adressée par l'intermédiaire d'un bus adresse 2 et reliée à un calculateur 3. La mémoire 1 comprend un bloc de stockage 4, un premier aiguillage 5, un réseau 6 et un deuxième aiguillage 7. Le bloc de stockage 4 comprend M bancs 8 mémoire repérés de 0 à M-1. Le premier aiguillage 5 a deux bus de données d'entrée, E1 et E2, et un bus de données de sortie S1. Le premier aiguillage 5 met en liaison un des deux bus de données d'entrée, E1 ou E2, avec le bus de données de sortie S1. Le réseau 6 est unidirectionnel. Il est composé d'ensembles de couches. Chaque couche fonctionne suivant un mode de fonctionnement déterminé parmi différents modes de fonctionnement. Le deuxième aiguillage 7 a un bus de données d'entrée E3 et deux bus de données de sortie, S2 et S3. Le deuxième aiguillage 7 met en liaison le bus de données d'entrée E3 avec un des deux bus de données de sortie, S2 ou S3. Le calculateur 3 comprend Q processeurs élémentaires 9 repérés de 0 à Q-1, un bus de données d'entrée et un bus de données de sortie.

Le bus de données de sortie du bloc de stockage 4 est connecté au bus de données d'entrée E1 du premier aiguillage 5.

Le bus de données de sortie S1 du premier aiguillage 5 est connecté au bus de données d'entrée du réseau 6.

Le bus de données de sortie du réseau 6 est connecté au bus de données d'entrée E3 du deuxième aiguillage 7.

Le bus de données de sortie S2 du deuxième aiguillage 7 est connecté au bus de données d'entrée du calculateur 3.

Le bus de données de sortie S3 du deuxième aiguillage 7 est connecté au bus de données d'entrée du bloc de stockage 4.

Le bus de données de sortie du calculateur 3 est connecté au bus de données d'entrée E2 du premier aiguillage 5.

Physiquement la mémoire est constituée de M bancs, chacun repéré par un indice m avec $0 \leq m < M$. Chaque banc est constitué de K cases mémoire, chacune repérée dans son banc par un indice k avec $0 \leq k < K$. La structure physique de la mémoire correspond donc à un tableau 2D, abréviation de deux dimensions, appelé ci-après MP, ayant une dimension "Banc" de taille M, une dimension "case" de taille K, contenant MxK éléments; MxK étant aussi la capacité totale de la mémoire. Un élément de ce tableau 2D est repéré par deux indices : m,k. Soit MP(m,k) un tel élément.

Fonctionnellement la mémoire est considérée comme un espace linéaire, c'est à dire un tableau 1D, abréviation de une dimension, appelé ci-dessous MF de MxK éléments, chacun repéré par un indice : @L avec $0 \leq @L < MxK$. Soit MF(@L) un tel élément.

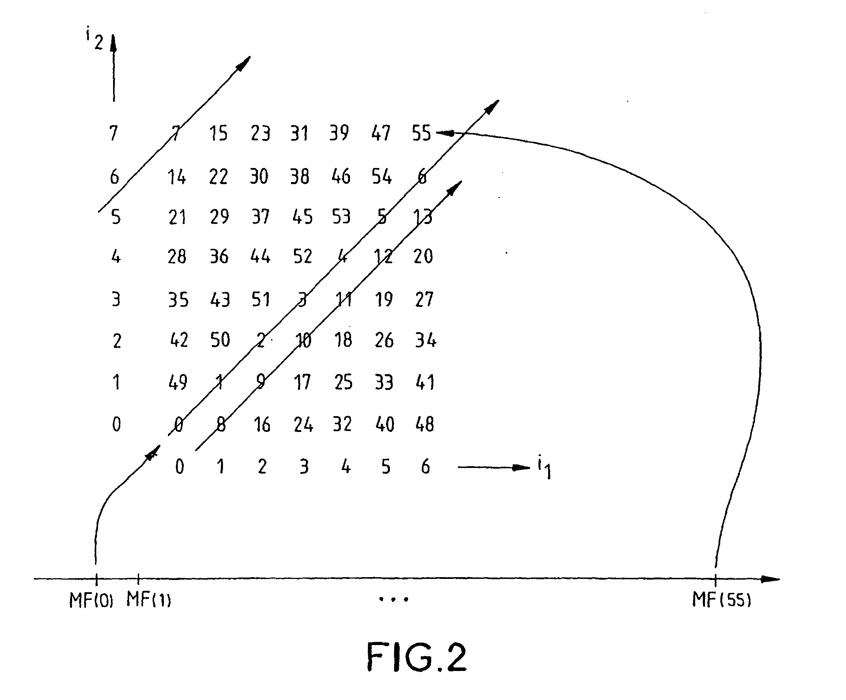

La figure 2 illustre la distribution suivant des diagonales des éléments de MF sur les éléments de MP : MF(0) → MP(0,0), MF(1) → MP(1,1),..., MF(54) → MP(5,6), MF(55) → MP(6,7).

Une diagonale est reprise chaque fois qu'elle sort à droite, respectivement en haut, dans la colonne la plus à gauche du tableau MP mais une ligne plus haut, respectivement dans la ligne la plus basse mais une colonne plus à droite. Si M et K sont premiers entre eux, il est connu de l'homme de l'art :

- que MF(MxK-1)→MP(M-1,K-1); dans le cas de l'exemple retenu et représenté sur la figure 2 cette correspondance correspond à MF(7x8-1)=MF (55) →MP(7-1,8-1) = MP(6,7) ce qui est effectivement le cas,
- qu'à chaque élément de MP(m,k) est distribué un et un seul élément de MF : MF(@L) avec m= (@L)(modM) et k= (@L)(modK).

Autrement dit, les indices m et k de l'élément de MP sur lequel est distribué l'élément de MF d'indice @L, correspondent à l'expression de @L dans un système de numération à résidu, noté en abrégé RNS pour l'appellation anglo-saxonne correspondante "Résidu Number System", dont la base est (M,K). Le système de numération à résidu, RNS, est un système connu de l'homme de l'art et notamment du livre de Szabo et Tanaka « Residue Arithmetic and its Applications to Computer Technology », Mc GRAW-HILL BOOK COMPANY 1967. Un nombre x exprimé en RNS suivant une base (X, Y) vaut, la valeur résiduelle obtenue modulo X, la valeur résiduelle obtenue modulo Y. Par exemple 25 vaut 4,1 en base (7,8) car 25 modulo 7 vaut 4 et 25 modulo 8 vaut 1.

La mémoire qui correspond à l'illustration de la figure 2 est adressée dans un système RNS de base (7,8). Le nombre maximum d'éléments qui puisse être adressé est 56 soit 7x8. Ces éléments sont numérotés de 0 à 55. Lors d'une écriture ou d'une lecture en mémoire d'un vecteur, il est nécessaire de connaître l'adresse des composantes du vecteur.

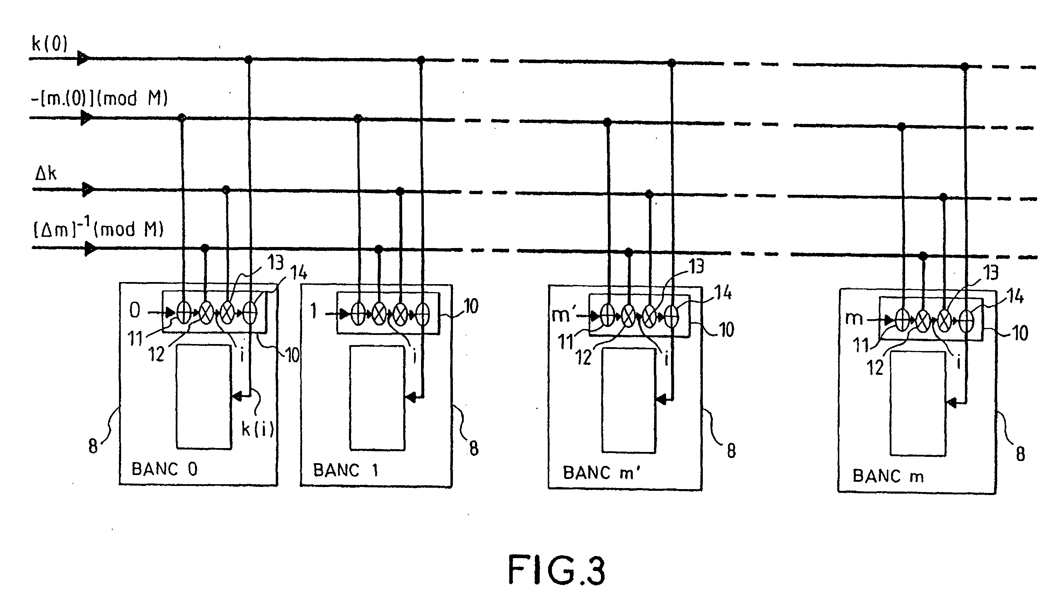

Dans une mémoire selon l'invention, chaque banc mémoire comporte un calculateur d'adresse 10 comme illustré par la figure 3.

La mémoire permet de lire ou d'écrire en un seul cycle d'horloge M composantes d'un vecteur en accès. Un vecteur a une origine qui est repérée par les indices m(0) et k(0) tels que

$$m(0) = @L(0)( \bmod M) \text{ et } k(0) = @L(0)(\bmod K).$$

Les composantes du vecteur sont régulièrement réparties , suivant des incréments constants d'indice [Δm](mod M) et [Δk](mod K) dans les bancs mémoire du fait de la distribution telle que décrite précédemment en regard de la figure 2. [Δm] est l'incrément suivant la dimension banc et [Δk] est l'incrément suivant la dimension case. Soit une composante i du vecteur à lire ou à écrire, elle est repérée en mémoire par les indices m(i) et k(i) tels que :

$$(1) \qquad m(i) = [m(0) + i \times [\Delta m](\bmod M)](\bmod M)$$

$$(2) \qquad k(i) = [k(0) + i \times [\Delta k] (\bmod K)](\bmod K)$$

m(i) correspond au numéro du banc dans lequel se trouve la composante i du vecteur et k(i) correspond au numéro de la case du banc m(i) dans laquelle se trouve cette composante i. Lors de l'accès à la mémoire, chaque banc reçoit en paramètres les valeurs :

-[m(0)](modM), k(0), $\Delta$k et $[\Delta m]^{-1}$ (modM) avec :

-[m(0)](modM) l'opposé de m(0) modulo M vérifiant la relation m(0) + [-m(0)] = 0 (modM);

$[\Delta m]^{-1}$ (modM) l'inverse de $\Delta$m modulo M vérifiant la relation $\Delta$m x $[\Delta m]^{-1}$ = 1 (modM).

Le calculateur d'adresse du banc m détermine la valeur i de la composante qu'il contient en extrayant i de la relation (1) :

$$(3) \qquad i = [[m(i) + - [m(0)]\,(modM)](modM) \times [(\Delta m)]^{-1}\,(modM)]$$

$$(modM)$$

Le calculateur d'adresse 10 comprend un premier additionneur 11 et un premier multiplicateur 12. Le premier additionneur 11 additionne le numéro m(i) du banc de la composante i du vecteur avec l'opposé, modulo M, du numéro m(0) du banc de l'origine du vecteur. Le numéro m(i) du banc de la composante i a une valeur m, le numéro m(0) du banc de l'origine a une valeur 0. Le résultat de l'addition est multiplié par le premier multiplicateur 12 avec l'inverse, modulo M, de l'incrément suivant la dimension banc ($\Delta$m). Le résultat de la multiplication donne la valeur i de la composante du vecteur contenu dans le banc m.

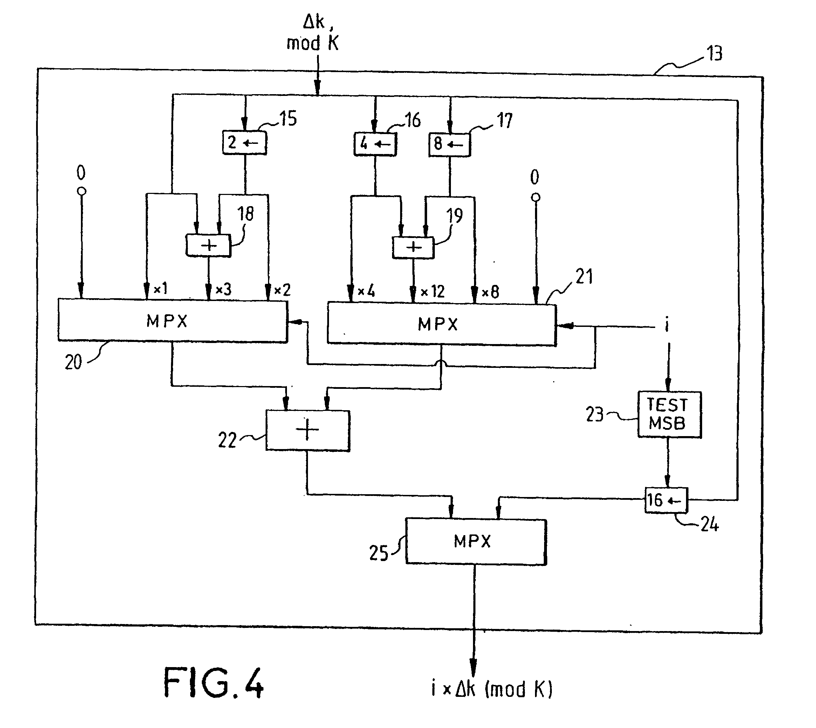

Connaissant i, et connaissant le paramètre $\Delta$k que le banc reçoit d'un bloc extérieur à la mémoire, par exemple un compilateur, le calculateur d'adresse calcule le produit i x $\Delta$k (modK), à l'aide d'un bloc de calcul 13. Un exemple de réalisation d'un bloc de calcul 13 est représenté sur la figure 4. Ii ne comporte aucun multiplieurs. Trois blocs de calcul 15, 16 et 17 réalisent les multiplications par 2, 4 ou 8 sans multiplieurs par décalage d'un, deux ou trois bits vers la gauche. Puis trois additionneurs 18, 19 et 22 réalisent toutes les multiplications de 0 à 15 ; la multiplication par 16 étant obtenue séparément par un test 23 de i sur le bit de plus fort poids suivi d'un décalage vers la gauche de 4 bits. Le choix de la bonne valeur est fait par trois multiplexeurs 20, 21, 25 commandés par la valeur de i.

Les données échangées entre la mémoire et le calculateur sont structurées sous la forme de vecteurs de N composantes.

Les vecteurs stockés dans les M bancs mémoire sont ordonnés suivant un ordre n et sont dits n-ordonnés.

Un vecteur est dit n-ordonné ou d'ordre n lorsque ses N composantes sont régulièrement espacées d'une valeur égale à n. Par exemple, pour un vecteur 3-ordonné de 8 composantes, les composantes du vecteur sont rangées dans l'ordre suivant : 0,3,6,1,4,7,2,5; chaque composante étant identifiée par son numéro qui varie de 0 à 7. L'origine 0 du vecteur est rangée dans un banc qui n'est pas obligatoirement le banc 0. L'ensemble des composantes du vecteur peut être affecté d'un décalage d. Dans ces conditions l'origine 0 du vecteur est stockée dans le banc d. En reprenant l'exemple précédent et en considérant que le décalage d = 2, les composantes du vecteur sont stockées dans le bloc de stockage dans l'ordre suivant : 2,5,0,3,6,1,4,7.

Les vecteurs traités par le calculateur sont 1-ordonnés, la composante i d'un vecteur est traitée par le processeur élémentaire i. En particulier, l'origine 0 du vecteur est traitée par le processeur élémentaire 0.

Lorsque le calculateur opère un accès en lecture de la mémoire le premier aiguillage met en liaison le bus de données d'entrée E1 avec le bus de données de sortie S1 et le deuxième aiguillage met en liaison le bus de données d'entrée E3 avec le bus de données de sortie S2.

Lorsque le calculateur opère un accès en écriture dans la mémoire, le premier aiguillage met en liaison le bus de données d'entrée E2 avec le bus de données de sortie S1 et le deuxième aiguillage met en liaison le bus de données d'entrée E3 avec le bus de données de sortie S3.

Lors d'un accès en lecture de la mémoire, le vecteur en entrée du réseau est n-ordonné avec ses composantes décalées d'une valeur d, et le vecteur en sortie du réseau est 1-ordonné et ne présente pas de décalage.

Lors d'un accès en écriture dans la mémoire, le vecteur en entrée du réseau est 1-ordonné et ne présente pas de décalage et le vecteur en sortie du réseau est n-ordonné et ses composantes sont décalées d'une valeur d.

Pour réaliser la permutation et la translation des composantes du vecteur, le réseau unidirectionnel est structuré en deux ensembles de couches. Un premier ensemble de couches réalise la permutation des composantes du vecteur pour transformer le vecteur n-ordonné en un vecteur 1-ordonné ou réciproquement pour transformer le vecteur 1-ordonné en un vecteur n-ordonné. Chaque couche comporte plusieurs modes de fonctionnement. La valeur p, définie comme le pas d'ordonnancement, détermine le mode de fonctionnement à utiliser par couche. Un deuxième ensemble de couches réalise la translation des composantes du vecteur pour caler l'origine du vecteur sur le processeur élémentaire 0 dans le cas d'une lecture de la mémoire ou pour décaler l'origine du vecteur dans le cas d'une écriture en mémoire. Chaque couche comporte plusieurs modes de fonctionnement. La valeur t, définie comme la valeur de translation, détermine le mode de fonctionnement à utiliser par couche.

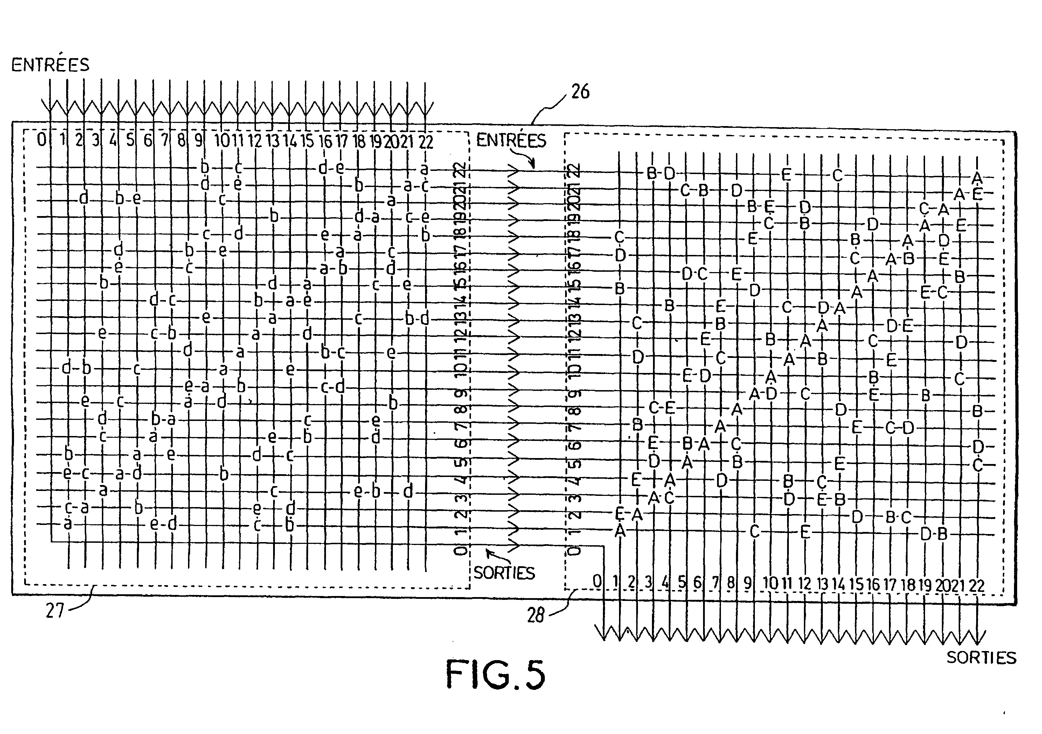

Les figures 5, 6, 7 et 8 donnent un exemple de réalisation du réseau.

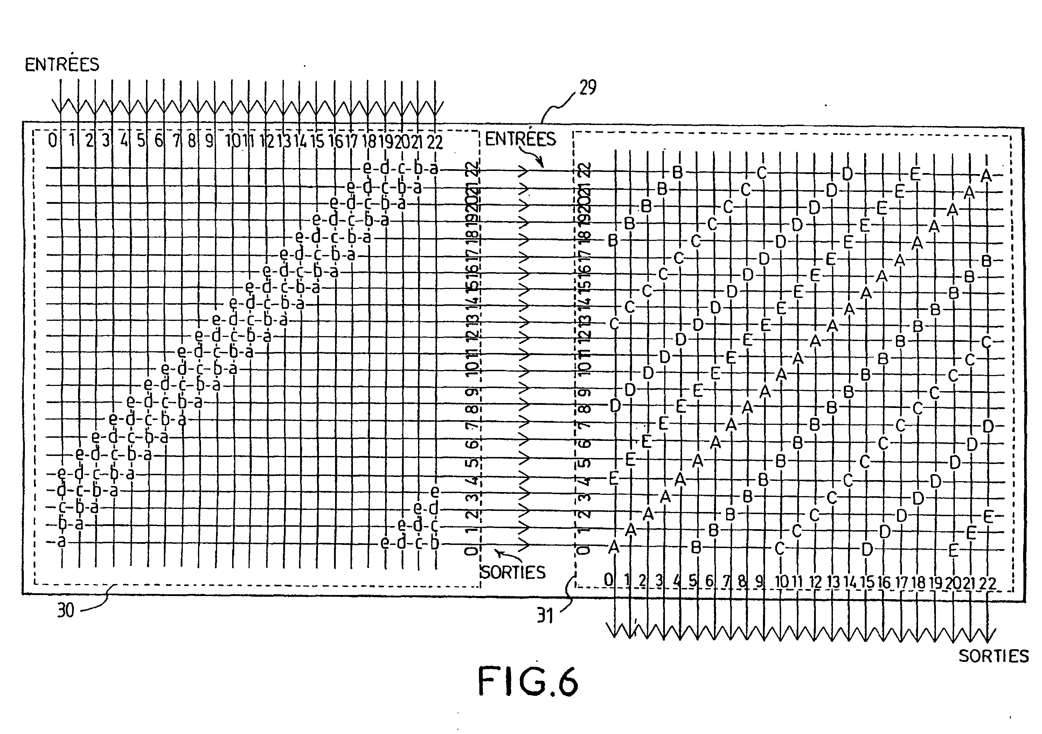

La figure 5 schématise le premier ensemble de couches. La figure 6 schématise le deuxième ensemble de couches.

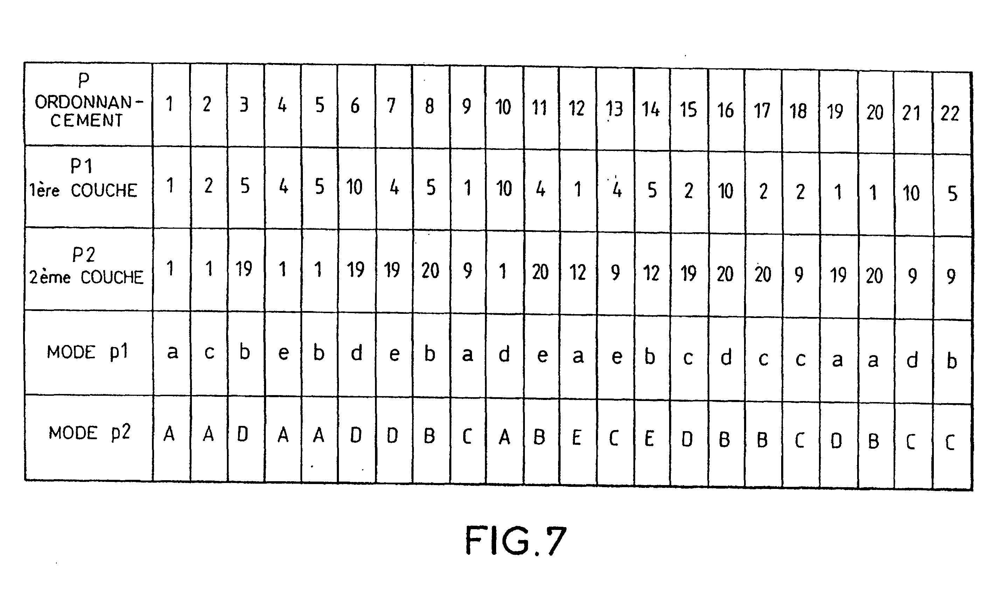

La figure 7 indique les modes de fonctionnement à utiliser en fonction du pas d'ordonnancement p.

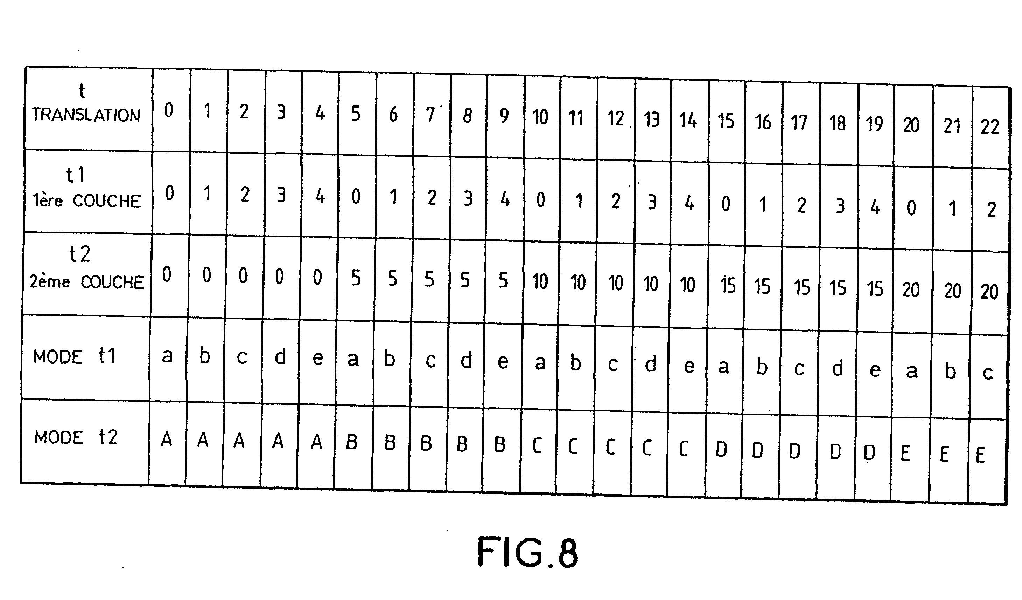

La figure 8 indique les modes de fonctionnement à utiliser en fonction de la valeur de translation t.

Le mode particulier de réalisation du réseau, illustré par les figures 5 et 6, présente un premier ensemble 26 composé de deux couches 27 et 28 et un deuxième ensemble 29 composé de deux couches 30 et 31. La première couche 27 du premier ensemble de couches 26 présente cinq modes de fonctionnement différents, notés a,b,c,d et e. La deuxième couche 28 du premier ensemble de couches 26 présente cinq modes de fonctionnement différents, notés A,B,C,D et E. La première couche 30 et la deuxième couche 31 du deuxième ensemble de couches 29 présentent aussi cinq modes de fonctionnement notés respectivement a,b,c,d,e et A,B,C,D,E.

Le premier tableau, figure 7, permet de déterminer le mode de fonctionnement de chacune des deux couches du premier ensemble. Le deuxième tableau, figure 8, permet de déterminer le mode de fonctionnement de chacune des deux couches du deuxième ensemble.

Le fonctionnement du réseau est illustré ci-après en prenant pour exemple, dans un premier temps une écriture en mémoire d'un vecteur initialement 1-ordonné et stocké sous la forme d'un vecteur 3-ordonné avec un décalage de 7, et dans un deuxième temps une lecture en mémoire d'un vecteur 3-ordonné et décalé de 7.

Dans le cas de l'écriture en mémoire, la détermination des valeurs p d'ordonnancement et t de translation est immédiate. Le vecteur stocké doit être 3-ordonné, par suite p=3. Les composantes du vecteur stocké doivent être décalées de 7, par suite t=7. Les valeurs de p et de t sont directement données par l'ordre et le décalage du vecteur.

Les valeurs p d'ordonnancement et t de translation permettent de déterminer les modes de fonctionnement des couches du réseau.

Le tableau de la figure 7 permet de déterminer pour le premier ensemble le mode de fonctionnement de la première couche, mode p1=b, et le mode de fonctionnement de la deuxième couche, mode p2=D compte tenu que p=3.

En entrée du réseau le vecteur est 1-ordonné et ses composantes ne sont pas décalées. Les composantes d'un vecteur se présentent à l'entrée de la première couche dans l'ordre suivant :

0,1,2,3,4,5,6,7,8,...22.

En traversant la première couche, les composantes du vecteur sont permutées. Le mode de fonctionnement de la première couche est déterminé par la lettre b qui correspond au mode p1 sélectionné. Le fonctionnement est détaillé ci-après en regard de la figure 5.

La première composante 0 ne subit pas de permutation. En effet, sur la ligne verticale qui part de 0, dans le quadrillage de la première couche, aucune lettre de mode n'apparaît. La deuxième composante 1 subît une permutation. En effet, la ligne verticale qui part de 1 contient la lettre b qui correspond au mode p1 retenu. La lettre b détermine la ligne horizontale sur laquelle sort la deuxième composante, dans ce cas la ligne 5. La troisième composante 2 sort sur la ligne horizontale 10 déterminée par la lettre b positionnée sur la ligne verticale qui part de l'entrée de la troisième composante. Et ainsi de suite, jusqu'à la vingt-troisième composante 22 qui sort sur la ligne horizontale 18.

A la sortie de la première couche, les composantes du vecteur se présentent dans l'ordre suivant :
0,14,5,19,10,1,15,6,20,11,2,16,7,21,12,3,17,8,22,13,4,18,9.

A l'entrée de la deuxième couche, les composantes du vecteur se présentent dans le même ordre qu'elles se présentent à la sortie de la première couche c'est à dire :
0,14,5,19,10,1,15,6,20,11,2,16,7,21,12,3,17,8,22,13,4,18,9.

La deuxième couche réalise une permutation des composantes du vecteur présentes sur ses entrées suivant un fonctionnement similaire à celui de la première couche. Le mode de fonctionnement est spécifique de la couche et est déterminé dans l'exemple retenu par la lettre D qui correspond au mode p2 sélectionné. Le fonctionnement est détaillé ci-après en regard de la figure 5.

La première composante 0 ne subit pas de permutation. En effet, sur la ligne horizontale qui part de 0, dans le quadrillage de la deuxième couche, aucune lettre de mode n'apparaît. La deuxième composante 14 subit une permutation. En effet, la ligne horizontale qui part de 1 contient la lettre D qui correspond au mode p2 retenu. La lettre D détermine la ligne verticale sur laquelle sort la deuxième composante, dans ce cas la ligne 19. La troisième composante 5 sort sur la ligne verticale 15 déterminée par la lettre D positionnée sur la ligne horizontale qui part de l'entrée de la troisième composante. Et ainsi de suite, jusqu'à la vingt-troisième composante 9 qui sort sur la ligne verticale 4.

Ainsi à la sortie de la deuxième couche, les composantes du vecteur se présentent dans l'ordre suivant :
0,8,16,1,9,17,2,10,18,3,11,19,4,12,20,5,13,21,6,14,22,7,15.

Après permutation de ses composantes par le premier ensemble de couches, le vecteur a ses composantes décalées par le deuxième ensemble de couches. Le tableau de la figure 8 permet de déterminer pour le deuxième ensemble de couches le mode de fonctionnement de la première couche, mode t1 =c, et le mode de fonctionnement de la deuxième couche, mode t2=B, compte tenu que t=7.

A l'entrée de la première couche du deuxième ensemble de couches du réseau, le vecteur de l'exemple a ses composantes 3-ordonnées. Les composantes du vecteur sont ainsi dans l'ordre suivant :
0,8,16,1,9,17,2,10,18,3,11,19,4,12,20,5,13,21,6,14,22,7,15.

La figure 6 permet de déterminer l'ordre des composantes du vecteur à la sortie de la première couche du deuxième ensemble de couches, puis à la sortie du réseau qui correspond à la sortie de la deuxième couche du deuxième ensemble de couches.

La première couche fonctionne suivant le mode t1 égal à c. Le fonctionnement est détaillé ci-après en regard de la figure 6.

La première composante 0 subit un décalage de 2. En effet, la ligne verticale qui part de 0, dans le quadrillage de la première couche, contient la lettre c qui correspond au mode d1 retenu. La lettre c détermine la ligne horizontale sur laquelle sort la première composante 0 dans ce cas la ligne 2. La deuxième composante 8 subit le même décalage que la première composante 0. En effet le quadrillage de la première couche présente chaque mode d1, dans l'exemple retenu c, suivant une diagonale. Et ainsi de suite jusqu'à ce que la diagonale, qui contient la lettre du mode d1, sorte du quadrillage. Pour la composante suivante, dans l'exemple la vingt-deuxième composante, la diagonale repart à l'intersection de la ligne verticale située en dessous de cette dernière composante et de la ligne horizontale correspondant à la sortie 0 de la première couche. La vingt-deuxième composante 7 sort ainsi sur la ligne 0. Et ainsi de suite jusqu'à la vingt-troisième composante 15 qui sort sur la ligne horizontale 1.

En sortie de la première couche les composantes du vecteur se présentent dans l'ordre suivant :
7,15,0,8,16,1,9,17,2,10,18,3,11,19,4,12,20,5,13,21,6,14,22.

A l'entrée de la deuxième couche, les composantes du vecteur se présentent dans le même ordre qu'elles se présentent à la sortie de la première couche. C'est à dire :
7,15,0,8,16,1,9,17,2,10,18,3,11,19,4,12,20,5,13,21,6,14,22.

La deuxième couche réalise une translation des composantes du vecteur présentes sur ses entrées suivant un fonctionnement similaire à celui de la première couche. Le mode de fonctionnement est spécifique de la couche et est déterminé dans l'exemple retenu par la lettre B qui correspond au mode t2 sélectionné. Le fonctionnement est détaillé ci-après en regard de la figure 6.

La première composante 7 subit un décalage de 5. En effet, la ligne horizontale qui part de 0, dans le quadrillage de la deuxième couche, contient la lettre B qui correspond au mode t2 retenu. La lettre B détermine la ligne verticale sur laquelle sort la première composante 7 dans ce cas la ligne 5. La deuxième composante 15 subit le même décalage que la première composante. En effet le quadrillage de la deuxième couche présente chaque mode t2, dans l'exemple retenu B, suivant une diagonale. Et ainsi de suite jusqu'à ce que la diagonale, qui contient la lettre du mode t2, sorte du quadrillage. Lorsque la diagonale sort par une ligne horizontale du quadrillage, elle est alors poursuivie en partant du point d'intersection entre la ligne verticale, la première à droite de la lettre du mode t2 la plus à droite, et la ligne horizontale correspondant à l'entrée 0. Lorsque la diagonale sort par une ligne verticale du quadrillage, elle est alors poursuivie en partant du point d'intersection entre la ligne horizontale, la première au-dessus de la lettre du mode t2 la plus à droite, et la ligne verticale correspondant à la sortie 0. Dans l'exemple retenu la diagonale qui contient le mode t2=B sort sur une ligne verticale du quadrillage. La dix-huitième composante 5 sort sur la ligne 22. La diagonale repart à l'intersection entre la ligne horizontale 18, la première au-dessus de la ligne horizontale correspondant à la dix-huitième composante, et la ligne verticale correspondant à la sortie 0. La dix-neuvième composante 13 sort ainsi sur la ligne 0. Et ainsi de suite jusqu'à la vingt-troisième composante 22 qui sort sur la ligne verticale 4. Ainsi à la sortie de la deuxième couche, les composantes du vecteur se présentent dans l'ordre suivant :
13,21,6,14,22,7,15,0,8,16,1,9,17,2,10,18,3,11,19,4,12,20,5.

Le tableau 1 de l'annexe 1 regroupe les différentes formes prises par le vecteur précédent au fil des couches du réseau. La sortie de la deuxième couche du deuxième ensemble de couches correspond à la sortie du réseau. Il est aisé de constater que l'origine 0 du vecteur est effectivement décalée d'une valeur 7 et que les composantes du vecteur sont effectivement 3-ordonnées ; la composante 1 étant à l'emplacement 7+3 = 10, la composante 2 à l'emplacement 10+3 = 13 et ainsi de suite modulo 23. La composante 6 se trouve ainsi à l'emplacement [7+3x6] (mod23) = 2.

Dans un deuxième temps, l'exemple envisagé correspond à une lecture en mémoire d'un vecteur dont les composantes sont 3-ordonnées et dont l'origine est stockée dans le banc mémoire 7.

Dans le cas de la lecture en mémoire, la détermination des valeurs p d'ordonnancement et t de translation n'est pas immédiate.

La valeur p d'ordonnancement est obtenue en calculant l'inverse, modulo le nombre N de composantes du vecteur, de l'ordre du vecteur lu.

$$(4) \qquad p = ordre^{-1} \ (modN)$$

Dans le cas de l'exemple la relation (4) donne :
$p = 3^{-1} \ (mod23) = 8$ en effet 3x8 =24=1(mod23).

La valeur t de translation est obtenue en résolvant l'équation suivante:

$$(5) \qquad \text{emplacement} (0) + \text{ordre} \times t = 0 \ (\text{mod} N)$$

avec :

emplacement (0), la valeur de l'emplacement qui correspond au n° du banc où se trouve l'origine du vecteur lu,
ordre, la valeur suivant laquelle sont ordonnées les composantes du vecteur lu.

La résolution de l'équation (5) dans le cas de l'exemple donne :

t=13 en effet $7+3\times13=46=2\times23=0(\text{mod}23)$.

L'utilisation du réseau est totalement identique, qu'il s'agisse d'une écriture d'un vecteur initialement 1-ordonné dont l'origine est calée sur le processeur élémentaire 0 et qui doit être stocké sous la forme d'un vecteur n-ordonné dont l'origine doit être calée sur un banc m ou bien qu'il s'agisse d'une lecture d'un vecteur initialement n-ordonné dont l'origine est stockée dans un banc m et qui doit être traité par les processeurs élémentaires sous la forme d'un vecteur l'ordonné dont l'origine est calée sur le processeur élémentaire 0. La différence entre l'écriture et la lecture réside dans les différents modes de fonctionnement des couches du réseau.

Ainsi en reprenant l'exemple qui, dans un premier temps correspond à une écriture en mémoire, les modes de fonctionnement des couches du réseau sont : mode p1 = b, mode p2 = D, mode t1 =c, mode t2 = B, et qui dans le deuxième temps correspond à une lecture en mémoire, les différents modes de fonctionnement des couches du réseau sont : mode p1=b, mode p2=B, mode t1=d et mode t2=C. Ces derniers modes de fonctionnement sont déterminés grâce au tableau de la figure 7 sachant que p=8, et grâce au tableau de la figure 8 sachant que t=13.

L'exploitation des figures 5 et 6, connaissant les modes de fonctionnement des différentes couches du réseau, permet de déterminer les différentes formes prises par le vecteur en sortie des différentes couches. Les différentes formes du vecteur de l'exemple sont regroupées dans le tableau 2 en annexe 2.

La sortie de la deuxième couche du deuxième ensemble de couches correspond à la sortie du réseau. Il est aisé de constater que l'origine 0 du vecteur, est à l'emplacement 0 et que les composantes du vecteur sont 1-ordonnées.

Un autre exemple est donné ci-après pour compléter l'illustration donnée dans le cas d'une lecture en mémoire. Le vecteur lu en mémoire est 4-ordonné et a une origine stockée à l'emplacement 7.

La relation (4) permet de déterminer la valeur p d'ordonnancement :

$p = 4^{-1} (\text{mod}23)$ soit p= 6 car $4\times6=24=1(\text{mod}23)$

La relation (5) permet de déterminer la valeur t du décalage :

$7 + 4 \times t = 0 \ (\text{mod } 23)$ soit t=4 car $7+4\times4 = 23 =0(\text{mod}23)$

Le tableau de la figure 7 permet de déterminer les modes de fonctionnement du premier ensemble de couches : mode p1 =d et mode p2 = D sachant que p = 6.

Le tableau de la figure 8 permet de déterminer les modes de fonctionnement du deuxième ensemble de couches : mode t1 = e et mode t2 =A sachant que t=4.

L'exploitation des figures 5 et 6, connaissant les modes de fonctionnement des différentes couches du réseau, permet de déterminer les différentes formes prises par le vecteur en sortie des différentes couches. Les différentes formes du vecteur de l'exemple sont regroupées dans le tableau 3 en annexe 3. La sortie de la deuxième couche du deuxième ensemble de couches correspond à la sortie du réseau. Il est aisé de constater que l'origine 0 du vecteur est à l'emplacement 0 et que les composantes du vecteur sont 1-ordonnées.

## TABLEAU 1

| Entrée du réseau : | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 |
|---|---|---|---|---|---|---|---|---|---|---|---|---|---|---|---|---|---|---|---|---|---|---|---|
| 1$^{er}$ ensemble de couches Sortie de la 1ère couche | 0 | 14 | 5 | 19 | 10 | 1 | 15 | 6 | 20 | 11 | 2 | 16 | 7 | 21 | 12 | 3 | 17 | 8 | 22 | 13 | 4 | 18 | 9 |
| Sortie de la 2ème couche | 0 | 8 | 16 | 1 | 9 | 17 | 2 | 10 | 18 | 3 | 11 | 19 | 4 | 12 | 20 | 5 | 13 | 21 | 6 | 14 | 22 | 7 | 15 |
| 2ème ensemble de couches Sortie de la 1ère couche | 7 | 15 | 0 | 8 | 16 | 1 | 9 | 17 | 2 | 10 | 18 | 3 | 11 | 19 | 4 | 12 | 20 | 5 | 13 | 21 | 6 | 14 | 22 |
| Sortie de la 2ème couche | 13 | 21 | 6 | 14 | 22 | 7 | 15 | 0 | 8 | 16 | 1 | 9 | 17 | 2 | 10 | 18 | 3 | 11 | 19 | 4 | 12 | 20 | 5 |

## TABLEAU 2

| Emplacement | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 |
|---|---|---|---|---|---|---|---|---|---|---|---|---|---|---|---|---|---|---|---|---|---|---|---|
| Entrée du réseau | 13 | 21 | 6 | 14 | 22 | 7 | 15 | 0 | 8 | 16 | 1 | 9 | 17 | 2 | 10 | 18 | 3 | 11 | 19 | 4 | 12 | 20 | 5 |
| $1^{er}$ ensemble de couches Sortie de la 1ère couche | 13 | 10 | 7 | 4 | 1 | 21 | 18 | 15 | 12 | 9 | 6 | 3 | 0 | 20 | 17 | 14 | 11 | 8 | 5 | 2 | 22 | 19 | 16 |
| Sortie de la 2ème couche | 13 | 14 | 15 | 16 | 17 | 18 | 19 | 20 | 21 | 22 | 0 | 1 | 2 | 3 | 4 | 5 | 6 | 7 | 8 | 9 | 10 | 11 | 12 |
| 2 ème ensemble de couches Sortie de la 1ère couche | 10 | 11 | 12 | 13 | 14 | 15 | 16 | 17 | 18 | 19 | 20 | 21 | 22 | 0 | 1 | 2 | 3 | 4 | 5 | 6 | 7 | 8 | 9 |
| Sortie de la 2ème couche | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 |

## TABLEAU 3

| Emplacement | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 |
|---|---|---|---|---|---|---|---|---|---|---|---|---|---|---|---|---|---|---|---|---|---|---|---|
| Entrée du réseau | 4 | 10 | 16 | 22 | 5 | 11 | 17 | 0 | 6 | 12 | 18 | 1 | 7 | 13 | 19 | 2 | 8 | 14 | 20 | 3 | 9 | 15 | 21 |
| 1 er ensemble de couches<br>Sortie de la 1ère couche | 4 | 0 | 19 | 15 | 11 | 7 | 3 | 22 | 18 | 14 | 10 | 6 | 2 | 21 | 17 | 13 | 9 | 5 | 1 | 20 | 16 | 12 | 8 |
| Sortie de la 2ème couche | 4 | 5 | 6 | 7 | 8 | 9 | 10 | 11 | 12 | 13 | 14 | 15 | 16 | 17 | 18 | 19 | 20 | 21 | 22 | 0 | 1 | 2 | 3 |
| 2ème ensemble de couches<br>Sortie de la 1ère couche | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 |
| Sortie de la 2ème couche | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 |

**Revendications**

1.  Mémoire de données organisées en tableaux, dont la structure permet des accès par vecteurs de N composantes, adressée suivant une base déterminée d'un système de numération en résidu, la mémoire étant organisée en M bancs mémoire (8) de K cases dont chacun, numérotés chacun entre 0 et M-1, et comportant un réseau unidirectionnel (6) réalisant une permutation des composantes du vecteur en accès qui consiste, soit à passer d'un vecteur n-ordonné en un vecteur 1-ordonné, soit à passer d'un vecteur 1-ordonné en un vecteur n-ordonné, **caractérisé en ce que**:

    -   chaque banc comporte un calculateur d'adresse (10) de l'adresse locale (k(i)) dans le banc considéré (m(i)) d'une composante (i) du vecteur en accès et **en ce que** le réseau unidirectionnel (6) réalise une translation d'une valeur déterminée t des composantes du vecteur en accès,
    -   pour calculer, dans un banc mémoire déterminé (m(i)), l'adresse locale (k(i)) de la composante d'un vecteur dont l'origine est stockée dans un banc mémoire numéroté m(0), le calculateur d'adresse (10) du banc mémoire déterminé (m(i)) réalise successivement:

        -   la détermination de la valeur i de la composante du vecteur qu'il contient au moyen de la relation suivante:

        $$i = [[m(i) + - [m(0)] \,(\text{mod}M)] \,(\text{mod}M) \times [(\Delta m)]^{-1} \,(\text{mod}M)] \,(\text{mod}M)$$

        avec -[m(0)](modM) l'opposé de m(0) modulo M vérifiant la relation:
        m(0) + [-m(0)] = 0 (modM) et avec $[(\Delta m)]^{-1}$ (modM) l'inverse de $\Delta m$ modulo M vérifiant la relation: $\Delta m \times [(\Delta m)]^{-1} = 1(\text{mod}M)$ et avec $\Delta m$ l'incrément d'indice avec lequel les composantes du vecteur sont stockées dans les bancs mémoire,
        -   le calcul de l'adresse locale (k(i)) connaissant i:

        $$k(i) = [k(0) + i \times [\Delta k] \,(\text{mod}K)](\text{mod}K)$$

        avec $\Delta k$ l'incrément d'indice avec lequel les composantes du vecteur sont stockées dans les cases mémoire et k(0) le numéro de la case mémoire dans laquelle est rangée l'origine du vecteur, et **en ce que**

    -   le réseau unidirectionnel (6) comprend un premier ensemble (26) de deux couches (27, 28) et en série un deuxième ensemble (29) de deux couches (30, 31), le premier ensemble de couches (26) étant organisé pour modifier d'une valeur p l'espacement entre les composantes successives d'un vecteur présent en entrée du réseau, soit pour p-ordonner les composantes 1-ordonnées du vecteur lors d'une écriture en mémoire, soit pour 1-ordonner les composantes p-ordonnées du vecteur lors d'une lecture de la mémoire, le deuxième ensemble de couches (29) étant organisé pour translater les composantes du vecteur, issu du premier ensemble de couches, d'une valeur déterminée t de translation, soit pour recaler l'origine du vecteur lors d'une lecture de la mémoire, soit pour décaler l'origine du vecteur lors d'une écriture en mémoire.

2.  Mémoire de données selon la revendication 1, **caractérisée en ce qu'**elle comprend un premier aiguillage (5) comportant deux entrées (E1, E2) et une sortie (S1) et un deuxième aiguillage (7) comportant une entrée (E3) et deux sorties (S2, S3), et **en ce que** ces aiguillages sont organisés pour que, lors d'un accès en lecture de la mémoire (1) le premier aiguillage (5) commute la sortie des bancs mémoire avec l'entrée du réseau unidirectionnel (6) et le deuxième aiguillage (7) commute la sortie du réseau unidirectionnel (6) avec la sortie de la mémoire (1), et que lors d'un accès en écriture dans la mémoire (1) le premier aiguillage (5) commute l'entrée de la mémoire (1) avec l'entrée du réseau unidirectionnel (6) et le deuxième aiguillage (7) commute la sortie du réseau unidirectionnel (6) avec l'entrée des bancs mémoire (8).

3.  Mémoire de données selon les revendications 1 et 2, **caractérisée en ce que** la valeur p d'espacement, la valeur t de translation, l'incrément d'indice $\Delta m$ avec lequel les composantes du vecteur sont stockées dans les bancs mémoire, l'incrément d'indice $\Delta k$ avec lequel les composantes du vecteur sont stockées dans les cases mémoire, le numéro m(0) du banc mémoire dans lequel est rangée l'origine du vecteur et le numéro k(0) de la case mémoire dans laquelle est rangée l'origine du vecteur, sont des données fournies à la mémoire lors de chaque accès en lecture ou en écriture de la mémoire.

**4.** Mémoire de données selon l'une quelconque des revendications 1 et 3, **caractérisée en ce que** chaque couche fonctionne suivant un mode de fonctionnement déterminé, pour le premier ensemble de couches par la valeur p d'espacement, et pour le deuxième ensemble de couches par la valeur t de translation.

**5.** Mémoire de données selon les revendications 1, 3 et 4, **caractérisée en ce que** le nombre de couches et le nombre de modes de fonctionnement sont paramétrables.

**6.** Mémoire dé données selon la revendication 5, **caractérisée en ce que** les deux couches en série (27, 28) du premier ensemble (26) et les deux couches en série (30, 31) du second ensemble ont chacune cinq modes de fonctionnement différents ((a, b, c, d, e), (A, B, C, D, E)).

**Claims**

**1.** Data memory for data organized as tables, whose structure allows accesses via vectors of N components, and which is addressed according to a specified base of a residue number system, the memory being organized as M memory banks (8) of K slots, each bank, each numbered between 0 and M-1, and comprising a unidirectional network (6) carrying out a permutation of the components of the vector being accessed which consists, either in going from an n-ordered vector to a 1-ordered vector, or in going from a 1-ordered vector to an n-ordered vector, **characterized in that**:

- each bank comprises an address calculator (10) for calculating the local address (k(i)) in the relevant bank (m(i)) of a component (i) of the vector being accessed and **in that** the unidirectional network (6) carries out a translation by a specified value t of the components of the vector being accessed,
- in order to calculate, in a specified memory bank (m(i)), the local address (k(i)) of the component of a vector whose origin is stored in a memory bank numbered m(0), the address calculator (10) of the specified memory bank (m(i)) carries out in succession:

    - the determination of the value i of the component of the vector which it contains by means of the following relation:

$$i = [[m(i) + [m(0)] \,(modM)]\,(modM) \times [(\Delta m)]^{-1}(modM)]$$

$$(modM)$$

    with -[m(0)](modM) the additive inverse of m(0) modulo M satisfying the relation:
    m(0) + [-m(0)] = 0 (modM) and with $[(\Delta m)]^{-1}(modM)]$ the inverse of $\Delta m$ modulo M satisfying the relation: $\Delta m \times [(\Delta m)]^{-1} = 1$ (modM) and with $\Delta m$ the index increment with which the components of the vector are stored in the memory banks,
    - the calculation of the local address (k(i)) knowing i:

$$k(i) = [k(0) + i \times [\Delta k]\,(modK)]\,(modK)$$

    with $\Delta k$ the index increment with which the components of the vector are stored in the memory slots and k(0) the number of the memory slot in which the origin of the vector is held, and **in that**

- the unidirectional network (6) comprises a first set (26) of two layers (27, 28) and in series a second set (29) of two layers (30, 31), the first set of layers (26) being organized so as to modify by a value p the spacing between the successive components of a vector present at the input of the network, either so as to p-order the 1-ordered components of the vector during a memory write, or so as to 1-order the p-ordered components of the vector during a memory read, the second set of layers (29) being organized so as to translate the components of the vector, which arises from the first set of layers, by a specified translation value t, either so as to realign the origin of the vector during a memory read, or so as to shift the origin of the vector during a memory write.

**2.** Data memory according to Claim 1, **characterized in that** it comprises a first switch (5) comprising two inputs (E1, E2) and an output (S1) and a second switch (7) comprising an input (E3) and two outputs (S2, S3), and **in that** these switches are organized so that, during a read access of the memory (1) the first switch (5) switchs the output of the memory banks with the input of the unidirectional network (6) and the second switch (7) swaps the output of the unidirectional network (6) with the output of the memory (1), and so that during a write access to the memory (1) the first switch (5) switchs the input of the memory (1) with the input of the unidirectional network (6) and the second switch (7) swaps the output of the unidirectional network (6) with the input of the memory banks (8).

3. Data memory according to Claims 1 and 2, **characterized in that** the spacing value p, the translation value t, the index increment $\Delta m$ with which the components of the vector are stored in the memory banks, the index increment $\Delta k$ with which the components of the vector are stored in the memory slots, the number m(0) of the memory bank in which the origin of the vector is held and the number k(0) of the memory slot in which the origin of the vector is held, are data supplied to the memory during each read access or write access to the memory.

4. Data memory according to either of Claims 1 and 3, **characterized in that** each layer operates according to a specified mode of operation determined, for the first set of layers by the spacing value p, and for the second set of layers by the translation value t.

5. Data memory according to Claims 1, 3 and 4, **characterized in that** the number of layers and the number of modes of operation are parameterizable.

6. Data memory according to Claim 5, **characterized in that** the two layers in series (27, 28) of the first set (26) and the two layers in series (30, 31) of the second set each have five different modes of operation ((a, b, c, d, e), (A, B, C, D, E)).

**Patentansprüche**

1. Speicher für tabellenartig organisierte Daten, dessen Struktur Zugriffe durch Vektoren mit N Komponenten ermöglicht und der anhand einer bestimmten Basis eines Residuum-Zahlensystems adressiert wird, wobei der Speicher in M Speicherbänken (8) mit K Fächern organisiert ist, die jeweils im Bereich von 0 bis M - 1 numeriert sind, und ein unidirektionales Gitter (6) aufweist, das beim Zugriff eine Permutation der Vektorkomponenten verwirklicht, die darin besteht, entweder von einem n-geordneten Vektor zu einem 1-geordneten Vektor überzugehen oder von einem 1-geordneten Vektor zu einem n-geordneten Vektor überzugehen, **dadurch gekennzeichnet, daß**:

   - jede Bank einen Adressenrechner (10) für die lokale Adresse (k(i)) einer Komponente (i) des Zugriffsvektors in der betrachteten Bank (m(i)) umfaßt und daß das unidirektionale Gitter (6) eine Translation der Komponenten des Zugriffsvektors um einen bestimmten Wert t verwirklicht,

   - für die Berechnung der lokalen Adresse (k(i)) der Komponente eines Vektors in einer bestimmten Speicherbank (m(i)), wobei der Ursprung des Vektors in einer mit m(0) numerierten Speicherbank gespeichert ist, der Adressenrechner (10) der bestimmten Speicherbank (m(i)) nacheinander ausführt: Bestimmung des Wertes i der Komponente des Vektors, die er enthält, mittels der folgenden Relation:

   $$i = [[m(i) + -[m(0)](modM)](modM) \times [(\Delta m)]^{-1}(modM)](modM)$$

   wobei $-[m(0)](modM)$ als Gegenteil von m(0) modulo M die folgende Relation erfüllt:
   $m(0) + [-m(0)] = 0 \ (modM)$ und wobei $[(\Delta m)]^{-1}(modM)$ als Kehrtwerte von $\Delta m$ modulo M die folgende Relation verifiziert: $\Delta m \times [(\Delta m)]^{-1} = 1 \ (modM)$, mit $\Delta m$ als Inkrement, mit dem die Komponenten des Vektors in den Speicherbänken gespeichert sind,

   - Berechnen der lokalen Adresse (k(i)), wenn i bekannt ist:

   $$k(i) = [k(0) + i \times [\Delta k](modK)](modK)$$

   mit $\Delta k$ als Inkrement, mit dem die Komponenten des Vektors in den Speicherfächern gespeichert sind, und k(0) als Nummer des Speicherfachs, in dem der Ursprung des Vektors angeordnet ist, und daß

- das unidirektionale Gitter (6) eine erste Gesamtheit (26) aus zwei Schichten (27, 28) und in Reihe damit eine zweite Gesamtheit (29) aus zwei Schichten (30, 31) umfaßt, wobei die erste Gesamtheit (26) von Schichten so organisiert ist, daß der Abstand zwischen den aufeinanderfolgenden Komponenten eines am Eingang des Gitters vorhandenen Vektors um einen Wert p modifiziert wird, entweder um für die 1-geordneten Komponenten des Vektors eine p-Ordnung zu schaffen, wenn in den Speicher geschrieben wird, oder um für die p-geordneten Komponenten des Vektors eine 1-Ordnung zu schaffen, wenn aus dem Speicher gelesen wird, wobei die zweite Gesamtheit (29) der Schichten so organisiert ist, daß die Komponenten des Vektors, der von der ersten Gesamtheit von Schichten ausgegeben wird, um einen bestimmten Translationswert t translatorisch verschoben werden, um entweder den Ursprung des Vektors neu einzustellen, wenn aus dem Speicher gelesen wird, oder um den Ursprung des Vektors zu verschieben, wenn in den Speicher geschrieben wird.

2. Datenspeicher nach Anspruch 1, **dadurch gekennzeichnet, daß** er eine erste Verzweigung (5), die zwei Eingänge (E1, E2) und einen Ausgang (S1) umfaßt, und eine zweite Verzweigung (7), die einen Eingang (E3) und zwei Ausgänge (S2, S3) umfaßt, aufweist und daß diese Verzweigungen so organisiert sind, daß bei einem Zugriff zum Lesen aus dem Speicher (1) die erste Verzweigung (5) den Ausgang der Speicherbänke mit dem Eingang des unidirektionalen Gitters (6) koppelt und die zweite Verzweigung (7) den Ausgang des unidirektionalen Gitters (6) mit dem Ausgang des Speichers (1) koppelt, und daß bei einem Zugriff zum Schreiben in den Speicher (1) die erste Verzweigung (5) den Eingang des Speichers (1) mit dem Eingang des unidirektionalen Gitters (6) koppelt und die zweite Verzweigung (7) den Ausgang des unidirektionalen Gitters (6) mit dem Eingang der Speicherbänke (8) koppelt.

3. Datenspeicher nach den Ansprüchen 1 und 2, **dadurch gekennzeichnet, daß** der Beabstandungswert p, der Translationswert t, das Indexinkrement $\Delta m$, mit dem die Komponenten des Vektors in den Speicherbänken gespeichert sind, das Indexinkrement $\Delta k$, mit dem die Komponenten des Vektors in den Speicherfächern gespeichert sind, die Nummer m(0) der Speicherbank, in der der Ursprung des Vektors angeordnet ist, und die Nummer k(0) des Speicherfachs, in dem der Ursprung des Vektors angeordnet ist, Daten sind, die zum Speicher bei jedem Lesezugriff und bei jedem Schreibzugriff auf den Speicher geliefert werden.

4. Datenspeicher nach irgendeinem der Ansprüche 1 und 3, **dadurch gekennzeichnet, daß** jede Schicht in einer bestimmten Betriebsart arbeitet, und zwar für die erste Gesamtheit von Schichten mit dem Beabstandungswert p und für die zweite Gesamtheit von Schichten mit dem Translationswert t.

5. Datenspeicher nach den Ansprüchen 1, 3 und 4, **dadurch gekennzeichnet, daß** die Anzahl von Schichten und die Anzahl von Betriebsarten parametrisierbar sind.

6. Datenspeicher nach Anspruch 5, **dadurch gekennzeichnet, daß** die zwei seriell angeordneten Schichten (27, 28) der ersten Gesamtheit (26) und die zwei seriell angeordneten Schichten (30, 31) der zweiten Gesamtheit jeweils fünf verschiedene Betriebsarten ((a, b, c, d, e), (A, B, C, D, E)) besitzen.

FIG.1

FIG.2

FIG.3

EP 1 125 205 B1

FIG.4

$i \times \Delta k \pmod{K}$

ENTRÉES

SORTIES

ENTRÉES

SORTIES

**FIG.5**

FIG.6

| P ORDONNAN-CEMENT | 1 | 2 | 3 | 4 | 5 | 6 | 7 | 8 | 9 | 10 | 11 | 12 | 13 | 14 | 15 | 16 | 17 | 18 | 19 | 20 | 21 | 22 |
|---|---|---|---|---|---|---|---|---|---|---|---|---|---|---|---|---|---|---|---|---|---|---|
| P1 1ère COUCHE | 1 | 2 | 5 | 4 | 5 | 10 | 4 | 5 | 1 | 10 | 4 | 1 | 4 | 5 | 2 | 10 | 2 | 2 | 1 | 1 | 10 | 5 |
| P2 2ème COUCHE | 1 | 1 | 19 | 1 | 1 | 19 | 19 | 20 | 9 | 1 | 20 | 12 | 9 | 12 | 19 | 20 | 20 | 9 | 19 | 20 | 9 | 9 |
| MODE p1 | a | c | b | e | b | d | e | b | a | d | e | a | e | b | c | d | c | c | a | a | d | b |
| MODE p2 | A | A | D | A | A | D | D | B | C | A | B | E | C | E | D | B | B | C | D | B | C | C |

FIG.7

EP 1 125 205 B1

| t<br>TRANSLATION | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 |
|---|---|---|---|---|---|---|---|---|---|---|---|---|---|---|---|---|---|---|---|---|---|---|---|
| t1<br>1ère COUCHE | 0 | 1 | 2 | 3 | 4 | 0 | 1 | 2 | 3 | 4 | 0 | 1 | 2 | 3 | 4 | 0 | 1 | 2 | 3 | 4 | 0 | 1 | 2 |
| t2<br>2ème COUCHE | 0 | 0 | 0 | 0 | 0 | 5 | 5 | 5 | 5 | 5 | 10 | 10 | 10 | 10 | 10 | 15 | 15 | 15 | 15 | 15 | 20 | 20 | 20 |
| MODE t1 | a | b | c | d | e | a | b | c | d | e | a | b | c | d | e | a | b | c | d | e | a | b | c |
| MODE t2 | A | A | A | A | A | B | B | B | B | B | C | C | C | C | C | D | D | D | D | D | E | E | E |

FIG.8